# EUROPEAN PATENT APPLICATION

(11) **EP 4 837 649 A1**
(43) Date of publication of application: **11.11.2026**
(21) Application number: 26741432.4
(22) Date of filing: 06.03.2026
(51) Int. Cl.: B01D 53/047, B01J 20/22, B01J 20/26, F25D 11/00, F25D 23/00

(54) **AIR COMPOSITION ADJUSTMENT DEVICE, REFRIGERATION DEVICE, AND SHIPPING CONTAINER**

(30) Priority: 21.03.2025 JP 2025047267
(71) Applicant: Daikin Industries, Ltd., Osaka-shi, Osaka 530-0001 (JP)
(72) Inventor: TOMITA, Chiharu, Osaka-shi, Osaka 530-0001 (JP); HIRATA, Wataru, Osaka-shi, Osaka 530-0001 (JP)
(74) Representative: Hoffmann Eitle
(86) International application number: PCT/JP2026/008786
(87) International publication number: WO 2026/197088

(57) **Abstract**

An air composition adjustment apparatus includes: an adsorption unit (50) having an adsorption member (51) that adsorbs oxygen in external air and a housing chamber (52) that houses the adsorption member (51); an introduction flow path (42) allowing an external space and the housing chamber (52) to communicate with each other; a transfer unit (61, 90) configured to transfer the external air to the housing chamber (52); a supply flow path (43) configured to supply a storage (2) with first gas obtained after the oxygen has been adsorbed by the adsorption member (51); a depressurizing pump (62) configured to depressurize the housing chamber (52) so that oxygen is desorbed from the adsorption member (51); and a discharge flow path (44) provided with the depressurizing pump (62) and configured to discharge second gas containing the oxygen desorbed from the adsorption member (51) to the external space (6).

## Description

### TECHNICAL FIELD

The present disclosure relates to an air composition adjustment apparatus, a refrigeration apparatus, and a transportation container.

### BACKGROUND ART

There is an air composition adjustment apparatus that adjusts the composition of internal air in a storage such as a container. In the air composition adjustment apparatus, nitrogen in the external air is adsorbed by an adsorption member. The space around the adsorption member is depressurized by the depressurizing pump, whereby nitrogen is desorbed from the adsorption member. The air which contains the desorbed nitrogen so that the oxygen concentration is reduced is transferred by the depressurizing pump and supplied to the storage through the supply flow path. Accordingly, the oxygen concentration in the storage decreases.

### CITATION LIST

### PATENT DOCUMENT

Patent Document 1: Japanese Unexamined Patent Publication No. 2023-58951

### SUMMARY OF THE INVENTION

### TECHNICAL PROBLEM

In the air composition adjustment apparatus of Patent Document 1, a depressurizing pump is provided in the supply flow path. The flow path from the adsorption member to the depressurizing pump is at a negative pressure. Accordingly, if there is a leakage in this flow path or the depressurizing pump, the external air flows into the supply flow path, which changes the composition of the air of which the concentration is adjusted. Consequently, it is impossible to adjust the oxygen concentration in the storage accurately.

An object of the present disclosure is to provide an air composition adjustment apparatus capable of adjusting an oxygen concentration in a storage accurately.

### SOLUTION TO THE PROBLEM

A first aspect is directed to an air composition adjustment apparatus. The air composition adjustment apparatus includes: an adsorption unit (50) having an adsorption member (51) that adsorbs oxygen in external air and a housing chamber (52) that houses the adsorption member (51); an introduction flow path (42) allowing an external space and the housing chamber (52) to communicate with each other; a transfer unit (61, 90) configured to transfer the external air to the housing chamber (52); a supply flow path (43) configured to supply a storage (2) with first gas obtained after the oxygen has been adsorbed by the adsorption member (51); a depressurizing pump (62) configured to depressurize the housing chamber (52) so that oxygen is desorbed from the adsorption member (51); and a discharge flow path (44) provided with the depressurizing pump (62) and configured to discharge second gas containing the oxygen desorbed from the adsorption member (51) to the external space (6).

In the first aspect, the transfer unit (61, 90) transfers the external air to the housing chamber (52) of the adsorption unit (50) through the introduction flow path (42). In the adsorption unit (50), the adsorption member (51) adsorbs oxygen in the air. The first gas obtained after the oxygen has been adsorbed flows through the supply flow path (43) and is supplied into the storage (2). When the depressurizing pump (62) depressurizes the housing chamber (52), oxygen is desorbed from the adsorption member (51). The second gas containing the desorbed oxygen flows through the discharge flow path (44) and is discharged to the external space (6).

In this configuration, even if there is a leakage in the flow path from the adsorption member (51) to the depressurizing pump (62) or in the depressurizing pump (62), the external air flows into the discharge flow path (44). Accordingly, the concentration of the first gas does not change due to an inflow of the external air. Therefore, it is possible to adjust the oxygen concentration in the storage accurately.

A second aspect is an embodiment of the first aspect. In the second aspect, the transfer unit (61, 90) is a pressurizing pump (61) that pressurizes the housing chamber (52).

In the second aspect, the pressurizing pump (61) pressurizes the inside of the housing chamber (52), and therefore it is possible to improve the oxygen adsorption capacity of the adsorption member (51).

A third aspect is an embodiment of the first or second aspect. In the third aspect, an absolute humidity of the first gas is higher than an absolute humidity of the second gas.

In the third aspect, since the absolute humidity of the first gas flowing through the supply flow path (43) is higher than the absolute humidity of the second gas flowing through the discharge flow path (44), it is possible to supply moisture into the storage (2).

A fourth aspect is an embodiment of the third aspect. In the fourth aspect, the depressurizing pump (62) has an inside flow path (62a) through which the second gas flows, and a seal portion (62b) that seals a gap between the inside flow path (62a) and the external space (6).

In the fourth aspect, it is possible that as the seal portion (62b) deteriorates, the external air may flow into the inside flow path (62a) through a gap around the seal portion (62b). However, the inside flow path (62a) is connected with the discharge flow path (44) rather than the supply flow path (43), and therefore the external air having flowed through the gap is not allowed to flow into the supply flow path (43).

A fifth aspect is an embodiment of any one of the first to fourth aspects. In the fifth aspect, the adsorption member is a metal-organic framework (MOF).

In the fifth aspect, it is possible to improve the oxygen adsorption capacity of the adsorption member.

A sixth aspect is an embodiment of any one of the first to fifth aspects. In the sixth aspect, the air composition adjustment apparatus further includes: a moisture removal unit (80) provided in the introduction flow path (42) and configured to remove moisture in air.

In the sixth aspect, the moisture removal unit (80) removes the moisture in the air, whereby it is possible to reduce adhesion of the moisture to the adsorption member (51). Consequently, it is possible to reduce deterioration of the adsorption member (51) due to the moisture.

A seventh aspect is an embodiment of the sixth aspect. In the seventh aspect, the moisture removal unit (80) is a water separation membrane unit (80) that separates moisture in air in the introduction flow path (42) and provides the separated moisture to the first gas in the supply flow path (43).

In the seventh aspect, the water separation membrane unit (80) supplies the separated moisture to the first gas. Accordingly, it is possible to supply moisture into the storage (2).

An eighth aspect is an embodiment of any one of the first to seventh aspects. In the eighth aspect, the adsorption unit (50) includes a first adsorption tube (53A) having a first adsorption member (51A) that adsorbs oxygen in the external air and a first housing chamber (52A) that houses the first adsorption member (51A), and a second adsorption tube (53B) having a second adsorption member (51B) that adsorbs oxygen in the external air and a second housing chamber (52B) that houses the second adsorption member (51B). The air composition adjustment apparatus further includes a switching mechanism (70) that switches between a first state in which the introduction flow path (42), the first housing chamber (52A), and the supply flow path (43) communicate with each other, while simultaneously the second housing chamber (52B) and the discharge flow path (44) communicate with each other, and the second state in which the introduction flow path (42), the second housing chamber (52B), and the supply flow path (43) communicate with each other, while simultaneously the second housing chamber (52B) and the discharge flow path (44) communicate with each other.

In the eighth aspect, when the switching mechanism (70) is in the first state, the first gas obtained after oxygen has been adsorbed by the first adsorption member (51A) of the first housing chamber (52A) can be supplied into the storage (2) through the supply flow path (43). Simultaneously, the second gas obtained after oxygen has been desorbed by the second adsorption member (51B) can be discharged to the outer space through the discharge flow path (44). When the switching mechanism (70) is in the second state, the first gas obtained after oxygen has been adsorbed by the second adsorption member (51B) of the second housing chamber (52B) can be supplied into the storage (2) through the supply flow path (43). Simultaneously, the second gas obtained after oxygen has been desorbed by the first adsorption member (51A) can be discharged to the outer space through the discharge flow path (44).

A ninth aspect is directed to a refrigeration apparatus. The refrigeration apparatus includes: the air composition adjustment apparatus (40) of any one of the first to eighth aspects; and a refrigerant circuit (11) configured to perform a refrigeration cycle to adjust a temperature of air in the storage (2).

A tenth aspect is directed to a transportation container. The transportation container includes: the air composition adjustment apparatus (40) of any one of the first to eighth aspects; and a container body (2) which is the storage.

### BRIEF DESCRIPTION OF THE DRAWINGS

[FIG. 1] FIG. 1 is a schematic perspective view of a transportation refrigeration apparatus of an embodiment.
[FIG. 2] FIG. 2 is a cross-sectional view of a transportation container including the transportation refrigeration apparatus of the embodiment.
[FIG. 3] FIG. 3 is a piping system diagram of a refrigerant circuit of the transportation refrigeration apparatus of the embodiment.
[FIG. 4] FIG. 4 is a schematic configuration diagram of an air composition adjustment apparatus of the embodiment.
[FIG. 5] FIG. 5 is a schematic configuration diagram of the air composition adjustment apparatus of the embodiment and shows the air flow in a first operation.
[FIG. 6] FIG. 6 is a schematic configuration diagram of the air composition adjustment apparatus of the embodiment and shows the air flow in a second operation.
[FIG. 7] FIG. 7 is a schematic configuration diagram of an air composition adjustment apparatus of a first variation.
[FIG. 8] FIG. 8 is a schematic configuration diagram of the air composition adjustment apparatus of the first variation and shows the air flow in a first operation of a normal operation.
[FIG. 9] FIG. 9 is a schematic configuration diagram of the air composition adjustment apparatus of the first variation and shows the air flow in a first operation of a water supply operation.
[FIG. 10] FIG. 10 is a schematic configuration diagram of an air composition adjustment apparatus of a second variation.

### DESCRIPTION OF EMBODIMENTS

An embodiment of the present disclosure will be described in detail below with reference to the drawings. The present disclosure is not limited to the embodiment shown below, and various changes can be made within the scope without departing from the technical concept of the present disclosure. Since each of the drawings is intended to illustrate the present disclosure conceptually, dimensions, ratios, or numbers may be exaggerated or simplified as necessary for ease of understanding.

### (1) Outline of Transportation Container

An air composition adjustment apparatus (40) of the present disclosure is applied to a transportation container (1). The transportation container (1) is a reefer container capable of controlling a temperature in the container. The transportation container (1) is used to transport fresh products (for example, fruits, vegetables, flowers, and plants) which conduct respiration by absorbing oxygen (O₂) from the air and releasing carbon dioxide (CO₂) into the air.

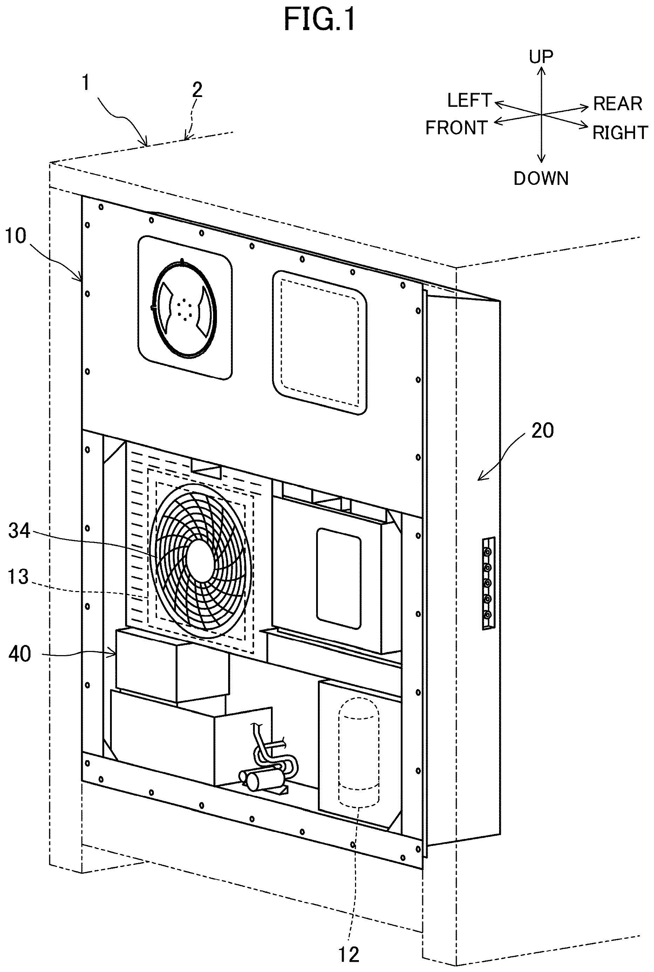

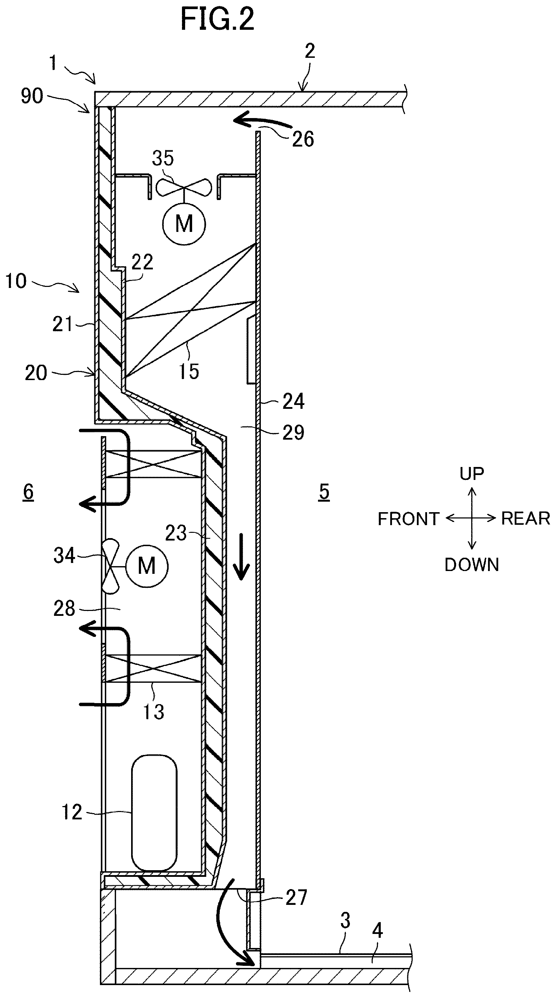

As shown in FIGS. 1 and 2, the transportation container (1) includes a container body (2) and a transportation refrigeration apparatus (10). The transportation refrigeration apparatus (10) is attached to the container body (2). The transportation container (1) is used for marine transportation. The transportation container (1) is conveyed by a marine transporter such as a ship.

The container body (2) is an example of a storage for storing the fresh products described above. The container body (2) is formed in a hollow box shape. The container body (2) is horizontally long. The container body (2) has an opening at one end in the longitudinal direction. The opening of the container body (2) is closed by the transportation refrigeration apparatus (10). The container body (2) contains an internal space (5) for storing the cargo of fresh products.

On a bottom portion of the internal space (5), a floorboard (3) on which the cargo is placed is disposed. An underfloor path (4) through which air blown from the transportation refrigeration apparatus (10) passes is formed between the floorboard (3) and a bottom plate of the container body (2). The underfloor path (4) is a flow path that extends in the longitudinal direction of the container body (2) along the bottom plate of the container body (2). One end of the underfloor path (4) is connected to an air outlet (27) of the transportation refrigeration apparatus (10), and the other end communicates with a space above the floorboard (3), or in other words, the space in which the cargo is stored.

### (2) Transportation Refrigeration Apparatus

The transportation refrigeration apparatus (10) includes a casing (20), a refrigerant circuit (11) that performs a refrigeration cycle, an external fan (34), and an internal fan (35).

### (2-1) Casing

The casing (20) includes an external wall portion (21), an internal wall portion (22), and a backboard (24). As will be described below, the casing (20) is provided with the refrigerant circuit (11), the external fan (34), and the internal fan (35).

The external wall portion (21) is a plate-shaped member disposed to cover the open end of the container body (2). The lower portion of the external wall portion (21) protrudes toward the inside of the container body (2). The internal wall portion (22) is a plate-shaped member formed along the external wall portion (21). The internal wall portion (22) is disposed to cover the surface of the external wall portion (21) that faces the inside of the container body (2). The space between the external wall portion (21) and the internal wall portion (22) is filled with a thermal insulator (23).

The lower portion of the casing (20) is recessed toward the inside of the container body (2). The lower portion of the casing (20) forms an external equipment room (28) located in an external space (6). The external fan (34) is disposed in the external equipment room (28).

The backboard (24) is a flat plate member that is substantially rectangular. The backboard (24) is disposed further inward of the container body (2) than the internal wall portion (22) is, and an internal air flow path (29) is formed between the backboard (24) and the internal wall portion (22). The upper end of the internal air flow path (29) forms an air inlet (26) of the casing (20), and the lower end forms the air outlet (27) of the casing (20).

### (2-2) Refrigerant Circuit

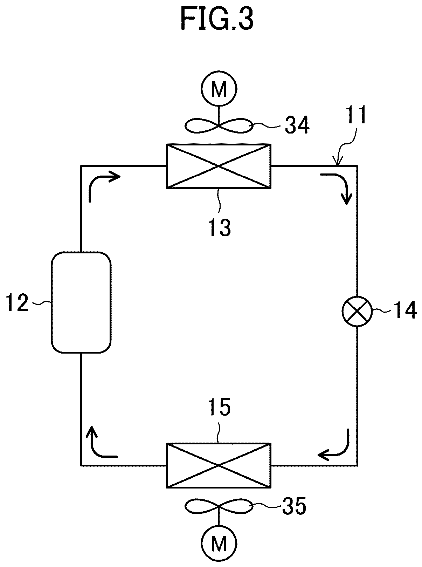

As shown in FIG. 3, the refrigerant circuit (11) is a closed circuit in which a compressor (12), an external heat exchanger (13), an expansion valve (14), and an internal heat exchanger (15) are connected through piping. When the compressor (12) is actuated, a refrigerant circulates through the refrigerant circuit (11) to create a vapor compression refrigeration cycle. As shown in FIG. 2, the external heat exchanger (13) is disposed in the external equipment room (28), and the internal heat exchanger (15) is disposed in a secondary flow path of the internal air flow path (29). The compressor (12) is disposed in the external equipment room (28). The refrigerant circuit (11) performs a refrigeration cycle to adjust the temperature of air in a storage (2).

### (2-3) Operation of Transportation Refrigeration Apparatus

The transportation refrigeration apparatus (10) performs a cooling operation for cooling the internal air in the transportation container (1). In the cooling operation, the compressor (12) of the refrigerant circuit (11) operates to circulate the refrigerant in the refrigerant circuit (11), thereby performing a vapor compression refrigeration cycle. In the refrigerant circuit (11), the refrigerant discharged from the compressor (12) passes through the external heat exchanger (13), the expansion valve (14), and the internal heat exchanger (15) in sequence, and then is sucked into and compressed in the compressor (12).

In the cooling operation, the external fan (34) and the internal fan (35) operate. When the external fan (34) operates, the external air in the external space (6) is sucked into the external equipment room (28) and passes through the external heat exchanger (13). In the external heat exchanger (13), the refrigerant dissipates heat to the external air and then condenses. When the internal fan (35) operates, the internal air in the internal space (5) of the transportation container (1) is sucked into the internal air flow path (29) and passes through the internal heat exchanger (15). In the internal heat exchanger (15), the refrigerant absorbs heat from the internal air and then evaporates.

The internal air present in the internal space (5) flows into the internal air flow path (29) through the air inlet (26). The air in the internal air flow path (29) is cooled when passing through the internal heat exchanger (15), and thereafter the cooled air is blown to the underfloor path (4) through the air outlet (27), and then flows into the internal space (5) through the underfloor path (4).

### (3) Air Composition Adjustment Apparatus

The air composition adjustment apparatus (40) is provided in a transportation container (1) to conduct so-called controlled atmosphere (CA) transportation. The air composition adjustment apparatus (40) is provided in the transportation refrigeration apparatus (10). The air composition adjustment apparatus (40) processes the external air to produce treatment gas different in composition from the external air. The air composition adjustment apparatus (100) supplies the treatment gas as first gas to the internal space (5) of the container body (2).

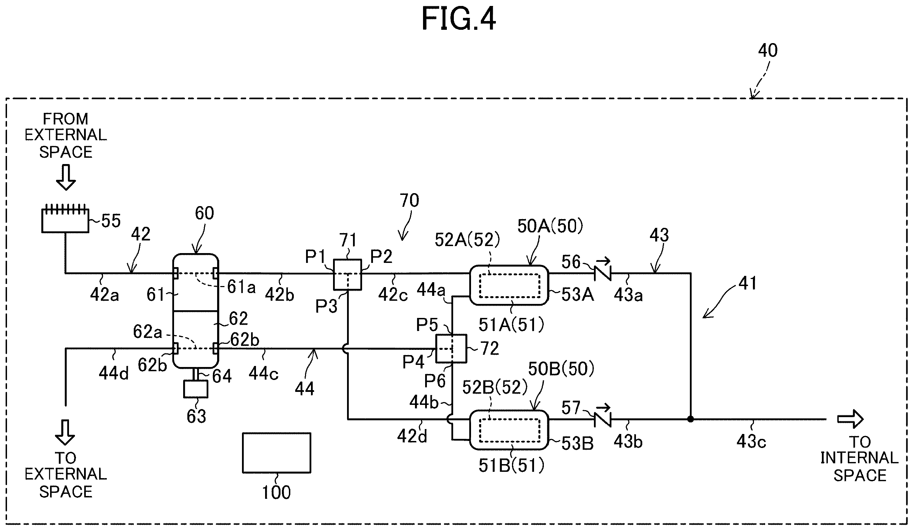

As shown in FIG. 4, the air composition adjustment apparatus (40) includes an air flow path (41) through which air flows, and component devices connected to the air flow path (41). The air flow path (41) includes an introduction flow path (42), a supply flow path (43), and a discharge flow path (44). The component devices include adsorption units (50), a pump unit (60), and a switching mechanism (70).

### (3-1) Adsorption Unit

The air composition adjustment apparatus (40) of this embodiment includes a first adsorption unit (50A) and a second adsorption unit (50B) as the adsorption units. The first adsorption unit (50A) includes a first adsorption member (51A) that adsorbs oxygen in the external air and a first housing chamber (52A) that houses the first adsorption member (51A). The second adsorption unit (50B) includes a second adsorption member (51B) that adsorbs oxygen in the external air and a second housing chamber (52B) that houses the second adsorption member (51B). The first adsorption unit (50A) has a first adsorption tube (53A) formed in a tube shape and closed hermetically. The first housing chamber (52A) is formed inside the first adsorption tube (53A). The second adsorption unit (50B) has a second adsorption tube (53B) formed in a tube shape and closed hermetically. The second housing chamber (52B) is formed inside the second adsorption tube (53B).

The first adsorption unit (50A) and the second adsorption unit (50B) have basically the same configuration, and thus they may be referred to as "the adsorption unit (50)". The first adsorption member (51A) and the second adsorption member (51B) have basically the same configuration, and thus they may be hereinafter referred to as "the adsorption member (51)". The first housing chamber (52A) and the second housing chamber (52B) have basically the same configuration, and thus they may be referred to as "the housing chamber (52)".

The adsorption unit (50) is a pressure swing adsorption (PSA) type unit. The adsorption unit (50) performs an adsorption operation and a desorption operation by changing the pressure in the housing chamber (52). In the adsorption operation, oxygen in the air is adsorbed by the adsorption member (51). In the desorption operation, oxygen is desorbed from the adsorption member (51) to the air.

The adsorption member (51) of this embodiment is a metal-organic framework (MOF). The oxygen adsorption capacity of the adsorption member (51) is high. Specifically, under the same temperature and pressure conditions, the oxygen adsorption capacity of the adsorption member (51) of this embodiment is higher than that of zeolite. Further, the water vapor adsorption capacity of the adsorption member (51) is relatively low. Specifically, under the same temperature and pressure conditions, the water vapor adsorption capacity of the adsorption member (51) of this embodiment is lower than that of zeolite.

### (3-2) Pump Unit

The air flow path (41) is provided with a pressurizing pump (61) and a depressurizing pump (62). In this embodiment, the pressurizing pump (61) and the depressurizing pump (62) are incorporated in an integrated pump unit (60).

The pressurizing pump (61) transfers the external air to the housing chamber (52) of the adsorption unit (50). Specifically, the pressurizing pump (61) transfers the external air to the first housing chamber (52A) and the second housing chamber (52B) through the introduction flow path (42). The pressurizing pump (61) increases the pressure in the housing chamber (52) to a positive pressure. A first inside flow path (61a) through which air flows is formed inside the pressurizing pump (61).

The depressurizing pump (62) depressurizes the housing chamber (52) so that oxygen is desorbed from the adsorption member (51). The depressurizing pump (62) transfers the air containing the oxygen desorbed from the adsorption member (51) (the second gas). Specifically, the depressurizing pump (62) discharges the second gas to the external space (6) through the discharge flow path (44).

A second inside flow path (62a) through which air flows is formed inside the depressurizing pump (62). As schematically shown in FIG. 4, a seal portion (62b) that seals a gap between the second inside flow path (62a) and the external space (6) is provided inside the depressurizing pump (62). The seal portion (62b) reduces the external air flowing into the second inside flow path (62a).

The pump unit (60) has a motor (63). In this embodiment, one motor (63) is connected to the pressurizing pump (61) and the depressurizing pump (62) via a shaft (64). In other words, when the motor (63) is driven, both the pressurizing pump (61) and the depressurizing pump (62) are driven.

### (3-3) Switching Mechanism

The switching mechanism (70) switches the air flow in the air flow path (41). The switching mechanism (70) switches between a first state and a second state. The switching mechanism (70) in the first state allows the introduction flow path (42), the first housing chamber (52A), and the supply flow path (43) to communicate with each other, while simultaneously allowing the second housing chamber (52B) and the discharge flow path (44) to communicate with each other. The switching mechanism (70) in the second state allows the introduction flow path (42), the second housing chamber (52B), and the supply flow path (43) to communicate with each other, while simultaneously allowing the first housing chamber (52A) and the discharge flow path (44) to communicate with each other.

Specifically, the switching mechanism (70) of this embodiment has a first three-way valve (71) and a second three-way valve (72). The first three-way valve (71) is provided in the introduction flow path (42). The first three-way valve (71) has a first port (P1), a second port (P2), and a third port (P3). The second three-way valve (72) is provided in the discharge flow path (44). The second three-way valve (72) has a fourth port (P4), a fifth port (P5), and a sixth port (P6). The first three-way valve (71) switches between a first state in which the first port (P1) and the second port (P2) communicate with each other and the first port (P1) and the third port (P3) are disconnected from each other and a second state in which the first port (P1) and the third port (P3) communicate with each other and the first port (P1) and the second port (P2) are disconnected from each other. The second three-way valve (72) switches between a first state in which the fourth port (P4) and the fifth port (P5) communicate with each other and the fourth port (P4) and the sixth port (P6) are disconnected from each other and a second state in which the fourth port (P4) and the sixth port (P6) communicate with each other and the fourth port (P4) and the fifth port (P5) are disconnected from each other. When the switching mechanism (70) is in the first state, the first three-way valve (71) is in the first state and the second three-way valve (72) is in the second state. When the switching mechanism (70) is in the second state, the first three-way valve (71) is in the second state and the second three-way valve (72) is in the first state.

### (3-4) Details of Introduction Flow Path

The introduction flow path (42) includes a main introduction path (42a), a first relay path (42b), a first branch introduction path (42c), and a second branch introduction path (42d). The inflow end of the main introduction path (42a) communicates with the external space (6), and the outflow end of the main introduction path (42a) connects with the inflow end of the first inside flow path (61a). The inflow end of the first relay path (42b) connects with the outflow end of the first inside flow path (61a), and the outflow end of the first relay path (42b) connects with the first port (P1) of the first three-way valve (71). The inflow end of the first branch introduction path (42c) connects with the second port (P2) of the first three-way valve (71), and the outflow end of the first branch introduction path (42c) communicates with the first housing chamber (52A). The inflow end of the second branch introduction path (42d) connects with the third port (P3) of the first three-way valve (71), and the outflow end of the second branch introduction path (42d) communicates with the second housing chamber (52B). An air filter (55) that collects dust in the external air is provided at the inflow end of the main introduction path (42a).

### (3-5) Details of Supply Flow Path

The supply flow path (43) includes a first branch supply path (43a), a second branch supply path (43b), and a main supply path (43c). The inflow end of the first branch supply path (43a) communicates with the first housing chamber (52A), and the outflow end of the first branch supply path (43a) connects with the inflow end of the main supply path (43c). The inflow end of the second branch supply path (43b) communicates with the second housing chamber (52B), and the outflow end of the second branch supply path (43b) connects with the inflow end of the main supply path (43c). The outflow end of the main supply path (43c) communicates with the internal space (5). The first branch supply path (43a) is provided with a first check valve (56), and the second branch supply path (43b) is provided with a second check valve (57). The first check valve (56) prohibits the air flow from the main supply path (43c) toward the first housing chamber (52A). The second check valve (57) prohibits the air flow from the main supply path (43c) toward the second housing chamber (52B).

### (3-6) Details of Discharge Flow Path

The discharge flow path (44) includes a first branch discharge path (44a), a second branch discharge path (44b), a second relay path (44c), and a main discharge path (44d). The inflow end of the first branch discharge path (44a) communicates with the first housing chamber (52A), and the outflow end of the first branch discharge path (44a) connects with the fifth port (P5) of the second three-way valve (72). The inflow end of the second branch discharge path (44b) communicates with the second housing chamber (52B), and the outflow end of the second branch discharge path (44b) connects with the sixth port (P6) of the second three-way valve (72). The inflow end of the second relay path (44c) connects with the fourth port (P4) of the second three-way valve (72), and the outflow end of the second relay path (44c) connects with the inflow end of the second inside flow path (62a). The inflow end of the main discharge path (44d) connects with the outflow end of the second inside flow path (62a), and the outflow end of the main discharge path (44d) communicates with the external space (6).

### (4) Controller

A controller (100) shown in FIG. 4 controls the component devices of the air composition adjustment apparatus (40). Specifically, the controller (100) controls switching the pump unit (60) between ON/OFF and switching the switching mechanism (70) between the first state and the second state. The controller (100) is implemented by one or more central processing units (CPUs), graphics processing units (GPUs), processing circuitry, and others, each including one or more processor cores. The controller (100) may be incorporated in a controller of the transportation refrigeration apparatus (10). The controller (100) may be physically separated from the transportation container (1) and may control the component devices in a wired or wireless manner.

### (5) Operation

The air composition adjustment apparatus (40) supplies the internal space (5) with the first gas obtained after oxygen in the external air has been adsorbed by the adsorption member (51) and the oxygen concentration has been lowered. Simultaneously, the second gas containing the oxygen desorbed from the adsorption member (51) is discharged to the external space (6). The air composition adjustment apparatus (40) repeats the first operation and the second operation alternately. In the first operation, the first adsorption unit (50A) performs the adsorption operation, and the second adsorption unit (50B) performs the desorption operation. In the second operation, the second adsorption unit (50B) performs the adsorption operation, and the first adsorption unit (50A) performs the desorption operation.

### (5-1) First Operation

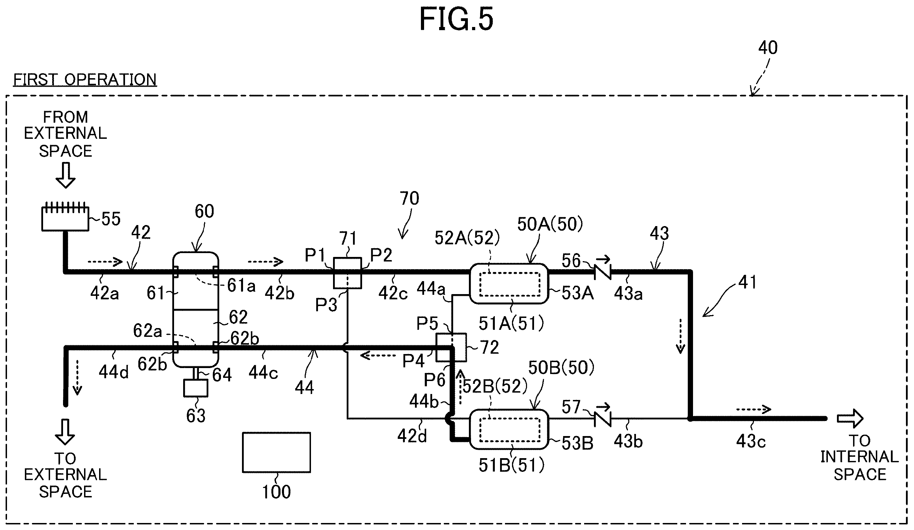

In the first operation shown in FIG. 5, the controller (100) operates the pressurizing pump (61) and the depressurizing pump (62), and turns the switching mechanism (70) into the first state, or more precisely, the first three-way valve (71) into the first state and the second three-way valve (72) into the second state. In the first operation, the external air is transferred by the pressurizing pump (61) and introduced into the first adsorption unit (50A) through the introduction flow path (42). Specifically, the external air flows through the air filter (55), the main introduction path (42a), the first inside flow path (61a) of the pressurizing pump (61), the first relay path (42b), and the first branch introduction path (42c) in sequence, and passes through the first adsorption member (51A) of the first housing chamber (52A). The first housing chamber (52A) is pressurized by the pressurizing pump (61). Consequently, the pressure in the first housing chamber (52A) becomes a positive pressure. The first adsorption member (51A) adsorbs oxygen in the air. The first gas that has passed through the first adsorption member (51A) is supplied to the internal space (5) through the supply flow path (43). Specifically, the first gas flows through the first branch supply path (43a) and the main supply path (43c) in sequence, and is supplied to the internal space (5). Consequently, the oxygen concentration in the internal space (5) decreases.

In the first operation, the second housing chamber (52B) is depressurized by the depressurizing pump (62). Consequently, the pressure in the second housing chamber (52B) becomes a negative pressure. In the second adsorption member (51B), oxygen is desorbed from the adsorption member (51). The second gas containing oxygen in the second housing chamber (52B) is discharged to the external space (6) through the discharge flow path (44). Specifically, the second gas flows through the second branch discharge path (44b), the second relay path (44c), the second inside flow path (62a) of the depressurizing pump (62), and the main discharge path (44d) in sequence, and is discharged to the external space (6).

### (5-2) Second Operation

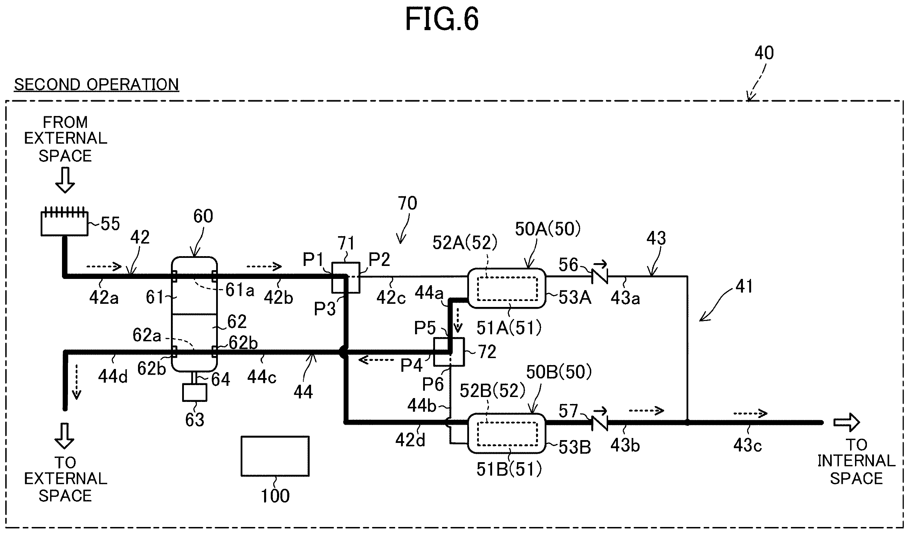

In the second operation shown in FIG. 6, the controller (100) operates the pressurizing pump (61) and the depressurizing pump (62), and turns the switching mechanism (70) into the second state, or more precisely, the first three-way valve (71) into the second state and the second three-way valve (72) into the first state. In the second operation, the external air is transferred by the pressurizing pump (61) and introduced into the second adsorption unit (50B) through the introduction flow path (42). Specifically, the external air flows through the air filter (55), the main introduction path (42a), the first inside flow path (61a) of the pressurizing pump (61), the first relay path (42b), and the second branch introduction path (42d) in sequence, and passes through the second adsorption member (51B) of the second housing chamber (52B). The second housing chamber (52) is pressurized by the pressurizing pump (61). Consequently, the pressure in the second housing chamber (52) becomes a positive pressure. The second adsorption member (51B) adsorbs oxygen in the air. The first gas that has passed through the second adsorption member (51B) is supplied to the internal space (5) through the supply flow path (43). Specifically, the first gas flows through the second branch supply path (43b) and the main supply path (43c) in sequence, and is supplied to the internal space (5). Consequently, the oxygen concentration in the internal space (5) decreases.

In the second operation, the first housing chamber (52A) is depressurized by the depressurizing pump (62). Consequently, the pressure in the first housing chamber (52A) becomes a negative pressure. In the first adsorption member (51A), oxygen is desorbed from the adsorption member (51). The second gas containing oxygen in the first housing chamber (52A) is discharged to the external space (6) through the discharge flow path (44). Specifically, the second gas flows through the first branch discharge path (44a), the second relay path (44c), the second inside flow path (62a) of the depressurizing pump (62), and the main discharge path (44d) in sequence, and is discharged to the external space (6).

### (6) Features of Embodiment

(6-1)
The air composition adjustment apparatus (40) of the embodiment includes the adsorption unit (50), the introduction flow path (42), the pressurizing pump (61), the supply flow path (43), the depressurizing pump (62), and the discharge flow path (44). The adsorption unit (89) includes the adsorption member (51) that adsorbs oxygen in the external air and the housing chamber (52) that houses the adsorption member (51). The introduction flow path (42) allows the external space and the housing chamber (52) to communicate with each other. The pressurizing pump (61) is a transfer unit for transferring the external air to the housing chamber (52). The supply flow path (43) is a flow path for supplying the internal space (5) with the first gas obtained after oxygen has been adsorbed by the adsorption member (51). The depressurizing pump (62) depressurizes the housing chamber (52) so that oxygen is desorbed from the adsorption member (51). The discharge flow path (44) is provided with the depressurizing pump (62) and discharges the second gas containing the oxygen desorbed from the adsorption member (51) to the external space (6).

In a conventional configuration, nitrogen is adsorbed by an adsorption member, and first gas containing nitrogen desorbed from the adsorption member is supplied to the internal space by the depressurizing pump. Thus, if there is a leakage at a seal portion of the depressurizing pump or a flow path on the primary side of the depressurizing pump, the external air flows into the supply flow path, which changes the concentration of the first gas.

In contrast, in the configuration of this embodiment, the depressurizing pump (62) is provided in the discharge flow path (44), which does not affect the concentration in the internal space (5) even if the external air flows into the discharge flow path (44). On the other side, since the supply flow path (43) is at a positive pressure, the external air normally cannot flow into the supply flow path (43). Therefore, it is possible to reduce the oxygen concentration in the first gas being increased due to an inflow of the external air. Consequently, it is possible to adjust the oxygen concentration in the internal space (5) accurately. In addition, it is possible to decrease the oxygen concentration in the internal space (5) immediately. Further, the sealing properties required for the pressurizing pump (61) and the depressurizing pump (62) are not significantly high, and therefore it is possible to simplify the sealing structure of the pressurizing pump (61) and the depressurizing pump (62).

Since the depressurizing pump (62) communicates with the external space (6) through the discharge flow path (44), the differential pressure between the primary side and the secondary side of the depressurizing pump (62) is smaller compared with, for example, the configuration in which the depressurizing pump (62) communicates with the internal space (5) through the supply flow path (43). Consequently, it is possible to reduce the load on the motor (63).

(6-2)
The transfer unit is the pressurizing pump (61) that pressurizes the housing chamber (52). Accordingly, in the adsorption operation, it is possible to increase the pressure in the housing chamber (52). Consequently, it is possible to increase the adsorption capacity of the adsorption member (51) and decrease the oxygen concentration in the first gas.

(6-3)
The adsorption member (51) of this embodiment is configured so that the absolute humidity [g-m³] of the first gas is higher than the absolute humidity [g-m³] of the second gas. That is, in this embodiment, the water vapor adsorption capacity of the adsorption member (51) is relatively low, and therefore the first gas with a relatively high absolute humidity is supplied from the supply flow path (43) to the internal space (5). Accordingly, it is possible to supply moisture to the internal space (5), and this moisture can be used to maintain the freshness of fresh products and others in the container body (2).

(6-4)
The depressurizing pump (62) has the second inside flow path (62a) through which the second gas flows, and the seal portion (62b) that seals the gap between the second inside flow path (62a) and the external space (6). The absolute humidity [g-m³] of the second gas is lower than the absolute humidity [g-m³] of the first gas. Accordingly, in the second inside flow path (62a), it is possible to reduce deterioration of the seal portion (62b) due to the influence of moisture in the second gas.

(6-5)
The adsorption member (51) is a metal-organic framework (MOF). Accordingly, the adsorption member (51) of which the oxygen adsorption capacity is high can be obtained. The adsorption member (51) of which the water vapor adsorption capacity is low can be obtained.

(6-6)
The adsorption unit (50) includes: the first adsorption unit (50A) having the first adsorption member (51A) that adsorbs oxygen in the external air and the first housing chamber (52A) that houses the first adsorption member (51A); and the second adsorption unit (50B) having the second adsorption member (51B) that adsorbs oxygen in the external air and the second housing chamber (52B) that houses the second adsorption member (51B). The air composition adjustment apparatus (40) further includes the switching mechanism (70) that switches between the first state in which the introduction flow path (42), the first housing chamber (52A), and the supply flow path (43) communicate with each other, while simultaneously the second housing chamber (52B) and the discharge flow path (44) communicate with each other, and the second state in which the introduction flow path (42), the second housing chamber (52B), and the supply flow path (43) communicate with each other, while simultaneously the second housing chamber (52B) and the discharge flow path (44) communicate with each other.

In this configuration, it is possible to continuously supply the internal space (5) with the first gas of which the oxygen concentration is reduced. The first gas supplied to the internal space (5) through the supply flow path (43) can be held at a predetermined oxygen concentration accurately.

### (7) Variations

The above embodiment may be configured as the following variations. In the following, the differences from the above embodiment will be described.

### (7-1) First Variation: Moisture Removal Unit

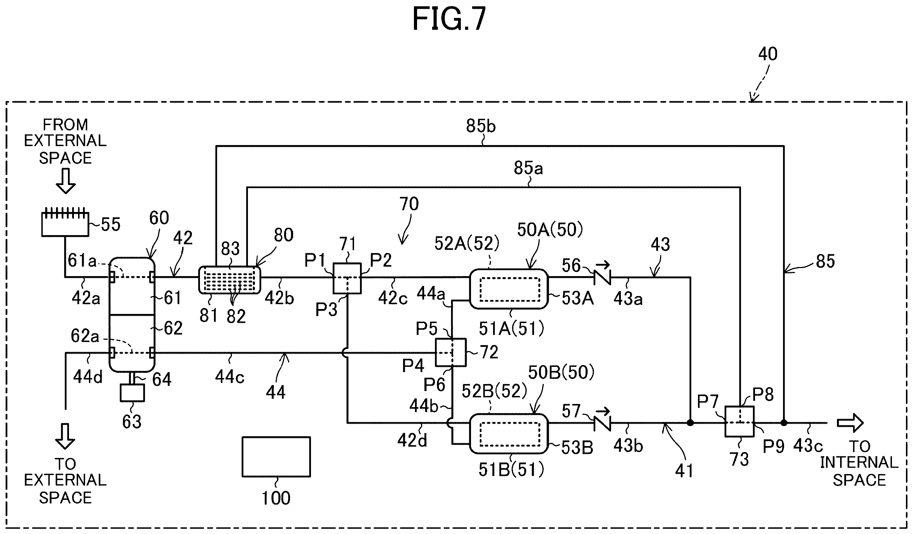

An air composition adjustment apparatus (40) of a first variation shown in FIG. 7 includes a moisture removal unit that removes moisture in the air in the introduction flow path (42). The moisture removal unit of the variation is a water separation membrane unit (80). The water separation membrane unit (80) separates moisture in the air in the introduction flow path (42), and provides the separated moisture to the first gas in the supply flow path (43).

Specifically, the air flow path (41) of the first variation is provided with the water separation membrane unit (80) and a third three-way valve (73). The water separation membrane unit (80) is provided in the introduction flow path (42), or specifically, in the first relay path (42b). In other words, the water separation membrane unit (80) is provided in part of the introduction flow path (42) that is between the pressurizing pump (61) and the adsorption unit (50). The water separation membrane unit (80) may be provided in part of the introduction flow path (42) that is upstream of the pressurizing pump (61).

The water separation membrane unit (80) has a container (81) connected to the introduction flow path (42), and a plurality of water separation membranes (82) disposed in the container (81). The container (81) is a cylindrical container that is closed hermetically. The water separation membrane (82) has the properties of allowing water molecules in the air to permeate. The water separation membrane (82) is a hollow fiber membrane made of a resin, for example. In the container (81), a separation chamber (83) is defined to provide the moisture having permeated the water separation membrane (82) to the air.

The third three-way valve (73) is provided in the supply flow path (43), or specifically, in the main supply path (43c). The third three-way valve (73) has a seventh port (P7), an eighth port (P8), and a ninth port (P9). The seventh port (P7) communicates with the housing chamber (52) of the adsorption unit (50). Specifically, the seventh port (P7) communicates with the first housing chamber (52A) through the first branch supply path (43a), and communicates with the second housing chamber (52) through the first branch supply path (43a). The eighth port (P8) is connected to an inflow end of a water supply path (85), the details of which will be described later. The ninth port (P9) communicates with the internal space (5). The third three-way valve (73) switches between a first state in which the seventh port (P7) and the ninth port (P9) communicate with each other and the seventh port (P7) and the eighth port (P8) are disconnected from each other and a second state in which the seventh port (P7) and the eighth port (P8) communicate with each other and the seventh port (P7) and the ninth port (P9) are disconnected from each other.

The supply flow path (43) of the first variation includes the water supply path (85) for providing moisture to the first gas. The water supply path (85) is connected to the water separation membrane unit (80). Specifically, the water supply path (85) includes an inflow-side flow path (85a) and an outflow-side flow path (85b). The inflow end of the inflow-side flow path (85a) is connected with the eighth port (P8) of the third three-way valve (73). The outflow end of the inflow-side flow path (85a) is connected with the inflow end of the separation chamber (83). The inflow end of the outflow-side flow path (85b) is connected with the outflow end of the separation chamber (83). The outflow end of the outflow-side flow path (85b) is connected with an intermediate part of the main supply path (43c).

In the air composition adjustment apparatus (40) of the first variation, the controller (100) conducts a normal operation and a water supply operation. In the normal operation and the water supply operation, the first operation and the second operation are conducted repeatedly. The normal operation is an operation for providing no moisture to the first gas, and is substantially the same as the operation of the embodiment. The water supply operation is an operation for providing the moisture separated by the water separation membrane unit (80) to the first gas. For the normal operation and the water supply operation, the first operation will be described as an example below.

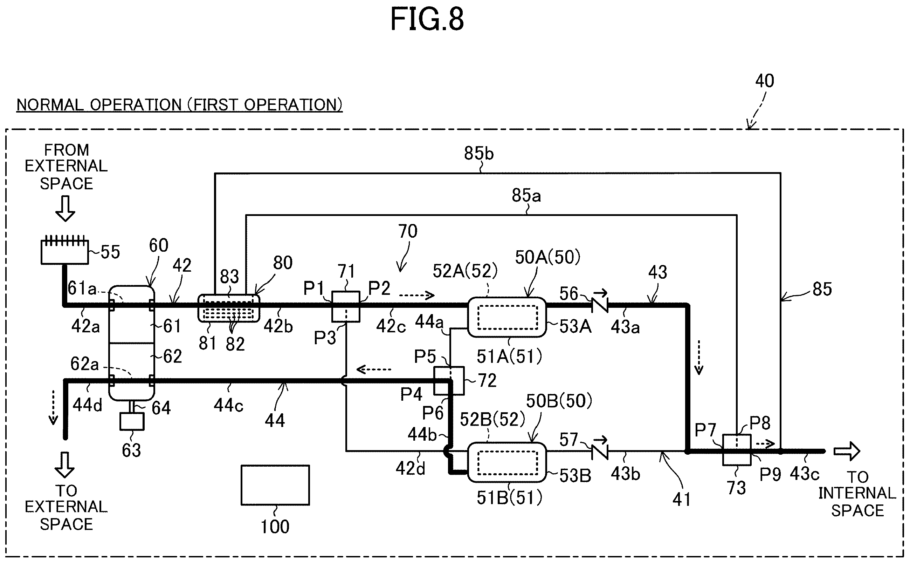

In the normal operation shown in FIG. 8, the controller (100) turns the third three-way valve (73) into the first state. In this case, in the first operation, the first gas having passed through the first adsorption member (51A) of the first adsorption unit (50A) flows through the main supply path (43c) without being modified, and is supplied to the internal space (5).

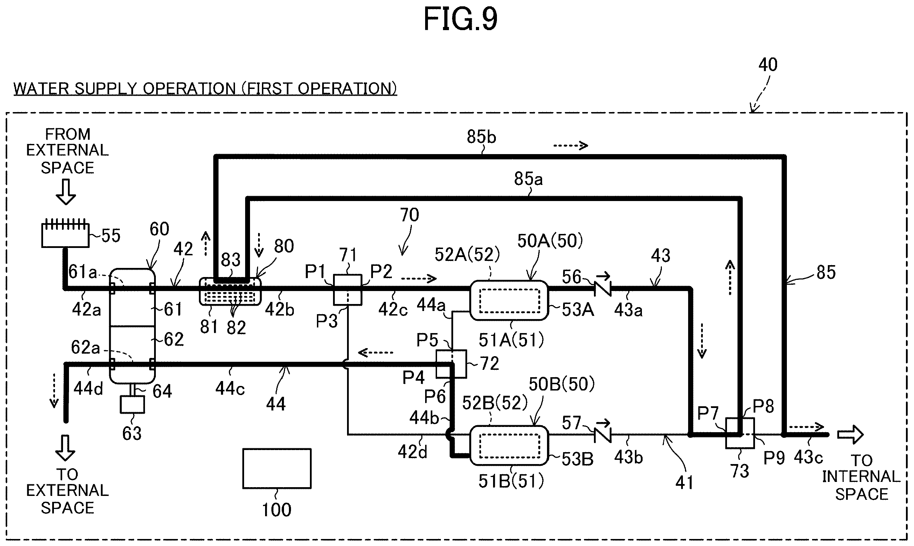

In the water supply operation shown in FIG. 9, the controller (100) turns the third three-way valve (73) into the second state. In this case, in the first operation, the first gas having passed through the first adsorption member (51A) of the first adsorption unit (50A) flows into the water supply path (85). Specifically, the first gas flows through the inflow-side flow path (85a), the separation chamber (83), and the outflow-side flow path (85b) in sequence.

On the other hand, the external air transferred by the pressurizing pump (61) flows through the introduction flow path (42), and flows inside the water separation membrane (82) of the water separation membrane unit (80). The moisture in the air flowing inside the water separation membrane (82) permeates into the separation chamber (83). Consequently, the external air in the introduction flow path (42) is dehumidified, while simultaneously the first gas in the separation chamber (83) is humidified.

The air dehumidified by the water separation membrane (82) passes through the first adsorption member (51A) of the first adsorption unit (50A). The moisture of this air is removed by the water separation membrane unit (80), and therefore it is possible to reduce adhesion of the moisture in the air to the first adsorption member (51A). Consequently, it is possible to reduce deterioration of the adsorption member (51) due to the moisture.

The first gas to which moisture is provided in the separation chamber (83) is supplied to the internal space (5) through the outflow-side flow path (85b) and part of the main introduction path (42a). Therefore, the moisture contained in the first gas can be used to maintain the freshness of fresh products and others in the container body (2). In the first variation, the water separation membrane unit (80) and the adsorption unit (50) are configured so that the absolute humidity [g-m³] in the first gas is higher than the absolute humidity [g-m³] in the second gas.

In the first variation, the moisture removal unit is not necessarily the water separation membrane unit (80), and may be a dryer or a filter that is disposed in the introduction flow path (42) in order to capture moisture in the air.

### (7-2) Second Variation: Transfer Unit

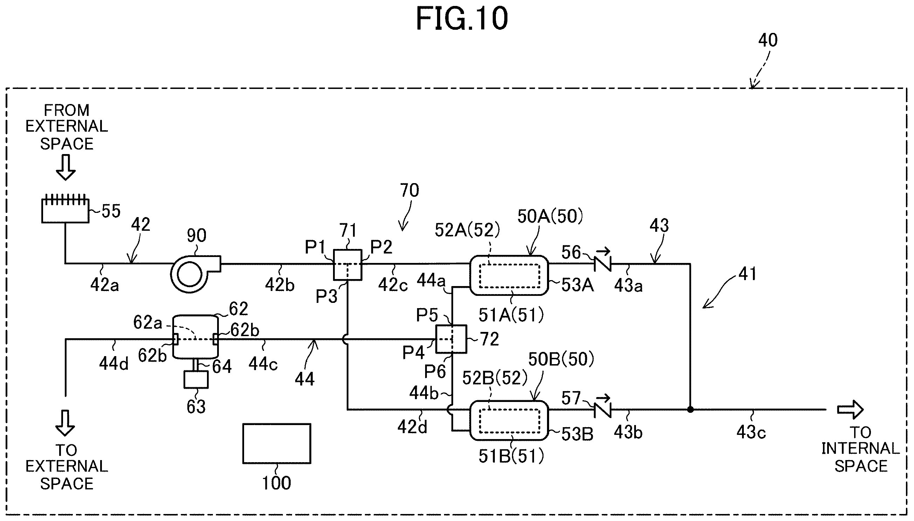

A second variation shown in FIG. 10 is different in the configuration of the transfer unit from the embodiment. The transfer unit of the second variation is a fan (90) that transfers the external air to the housing chamber (52). The depressurizing pump (62) of the second variation is a single pump that is not integrated with the pressurizing pump (61). In the second variation, the controller (100) controls the flow rate of the fan (90) and the flow rate of the depressurizing pump (62) individually.

The transportation container (1) may be a container for overland transportation that is transported by a truck, rail, or others. The transportation container (1) does not necessarily have an air cooling function.

### (8) Other Embodiments

The air composition adjustment apparatus (90) may be applied to a storage (2) fixed somewhere rather than the storage (2) of the transportation container. The air composition adjustment apparatus (40) may be applied to a storage (2) which does not have the transportation refrigeration apparatus (10). The air composition adjustment apparatus (40) may be provided in a stationary refrigeration apparatus that adjusts the temperature of air in the storage (2) fixed somewhere.

The number of the adsorption units (50) may be one. In this case, the adsorption unit (50) conducts the adsorption operation and the desorption operation alternately. The first gas is supplied to the internal space (5) semi-continuously.

The switching mechanism is not necessarily configured by the first three-way valve (71) and the second three-way valve (72), and may be configured by, for example, four on-off valves or four flow rate adjusting valves.

The adsorption member may be an adsorption member other than a MOF. In this case, in one preferred embodiment, the adsorption member is made of a material of which the oxygen adsorption capacity is high.

While the embodiment and variations thereof have been described above, it will be understood that various changes in form and details may be made without departing from the spirit and scope of the claims. The embodiment, the variations thereof, and the other embodiments may be combined and replaced appropriately with each other without deteriorating intended functions of the present disclosure.

The expressions such as "first," "second," "third," . . . , described above are used to distinguish the terms to which these expressions are given, and do not limit the number and order of the terms.

### INDUSTRIAL APPLICABILITY

As described above, the present disclosure is useful for an air composition adjustment apparatus and a transportation container.

### DESCRIPTION OF REFERENCE CHARACTERS

- 1: Transportation Container
- 2: Container Body (Storage)
- 6: External Space
- 40: Air Composition Adjustment Apparatus
- 42: Introduction Flow Path
- 43: Supply Flow Path
- 44: Discharge Flow Path
- 50: Adsorption Unit
- 50A: First Adsorption Unit
- 50B: Second Adsorption Unit
- 51: Adsorption Member
- 51A: First Adsorption Member
- 51B: Second Adsorption Member
- 52: Housing Chamber
- 52A: First Housing Chamber
- 61: Pressurizing Pump (Transfer Unit)
- 62: Depressurizing Pump
- 62A: Second Inside Flow Path (Inside Flow Path)
- 62b: Seal Portion
- 70: Switching Mechanism
- 80: Water Separation Membrane Unit (Moisture Removal Unit)
- 90: Fan (Transfer Unit)

## Claims

1. An air composition adjustment apparatus comprising:
an adsorption unit (50) having an adsorption member (51) that adsorbs oxygen in external air and a housing chamber (52) that houses the adsorption member (51);
an introduction flow path (42) allowing an external space (6) and the housing chamber (52) to communicate with each other;
a transfer unit (61, 90) configured to transfer the external air to the housing chamber (52);
a supply flow path (43) configured to supply a storage (2) with first gas obtained after the oxygen has been adsorbed by the adsorption member (51);
a depressurizing pump (62) configured to depressurize the housing chamber (52) so that oxygen is desorbed from the adsorption member (51); and
a discharge flow path (44) provided with the depressurizing pump (62) and configured to discharge second gas containing the oxygen desorbed from the adsorption member (51) to the external space (6).

2. The air composition adjustment apparatus of claim 1, wherein
the transfer unit (61, 90) is a pressurizing pump (61) that pressurizes the housing chamber (52).

3. The air composition adjustment apparatus of claim 1 or 2, wherein
an absolute humidity of the first gas is higher than an absolute humidity of the second gas.

4. The air composition adjustment apparatus of claim 3, wherein
the depressurizing pump (62) has
an inside flow path (62a) through which the second gas flows, and
a seal portion (62b) that seals a gap between the inside flow path (62a) and the external space (6).

5. The air composition adjustment apparatus of any one of claims 1 to 4, wherein
the adsorption member (51) is a metal-organic framework (MOF).

6. The air composition adjustment apparatus of any one of claims 1 to 5, further comprising:
a moisture removal unit (80) provided in the introduction flow path (42) and configured to remove moisture in air.

7. The air composition adjustment apparatus of claim 6, wherein
the moisture removal unit (80) is a water separation membrane unit (80) that separates moisture in air in the introduction flow path (42) and provides the separated moisture to the first gas in the supply flow path (43).

8. The air composition adjustment apparatus of any one of claims 1 to 7, wherein
the adsorption unit (50) includes
a first adsorption unit (50A) having a first adsorption member (51A) that adsorbs oxygen in the external air and a first housing chamber (52A) that houses the first adsorption member (51A), and
a second adsorption unit (50B) having a second adsorption member (51B) that adsorbs oxygen in the external air and a second housing chamber (52B) that houses the second adsorption member (51B), and
the air composition adjustment apparatus further comprises a switching mechanism (70) that switches between a first state in which the introduction flow path (42), the first housing chamber (52A), and the supply flow path (43) communicate with each other, while simultaneously the second housing chamber (52B) and the discharge flow path (44) communicate with each other, and the second state in which the introduction flow path (42), the second housing chamber (52B), and the supply flow path (43) communicate with each other, while simultaneously the second housing chamber (52B) and the discharge flow path (44) communicate with each other.

9. A refrigeration apparatus comprising:
the air composition adjustment apparatus (40) of any one of claims 1 to 8; and
a refrigerant circuit (11) configured to perform a refrigeration cycle to adjust a temperature of air in the storage (2).

10. A transportation container comprising:
the air composition adjustment apparatus (40) of any one of claims 1 to 9; and
a container body (2) which is the storage.
